# EUROPEAN PATENT APPLICATION

(11) **EP 3 184 825 A1**
(43) Date of publication of application: **28.06.2017**
(21) Application number: 16202695.9
(22) Date of filing: 07.12.2016
(51) Int. Cl.: F04D 29/32, F01D 5/28, F01D 5/30, F04D 29/34, F04D 29/38, F04D 29/02, F01D 5/14, B23K 20/24

(54) **A FAN BLADE ROOT BLOCK ASSEMBLY**

(30) Priority: 21.12.2015 GB 201522522
(71) Applicant: Rolls-Royce plc, London SW1E 6AT (GB)
(72) Inventor: Doorbar, Phillip, Derby, Derbyshire DE24 8BJ (GB)
(74) Representative: Rolls-Royce plc

(57) **Abstract**

A fan blade root block assembly comprises a fan blade, and a cheek piece.

The fan blade comprises a first root portion having a first root portion end, and a second root portion having a second root portion end.

The first root portion is aligned side by side with the second root portion, and the cheek piece is attached to each of the first root portion end and the second root portion end.

## Description

### Field of the Disclosure

The present disclosure relates to a fan blade root block assembly and particularly, but not exclusively, to a fan blade root block assembly for a gas turbine engine.

### Background to the Disclosure

It is known to produce fan blades for a turbofan engine using a sandwich of material sheets that are diffusion bonded and super-plastically formed into the final configuration.

The fan blade requires a root block that can subsequently be machined to provide a fan blade root attachment feature. The root block may be incorporated into the sandwich of material used to super-plastically form the fan blade, or may be welded to the fan blade after the super-plastic forming processes are complete.

Incorporating the root block into the initial sandwich of material may restrict the degree of super-plastic forming that can be achieved.

Welding the root block to the fan blade after the super-plastic forming process requires extra material to be added both to the root block and to the fan blade itself. This additional material is necessary to keep the heat affected zone resulting from the welding operation away from the final fan blade material. This makes the process more costly and time consuming.

### Statements of Disclosure

According to a first aspect of the present disclosure there is provided a fan blade root block assembly comprising:
a fan blade; and
a cheek piece,
the fan blade comprising:
   a first root portion having a first root portion end; and
   a second root portion having a second root portion end,
the first root portion being aligned side by side with the second root portion, and the cheek piece being attached to each of the first root portion end and the second root portion end.

The addition of cheek pieces to the fan blade enables the fan blade itself to be formed with a minimum of material, with the cheek pieces providing the basis for the fan blade root features. This makes the fan blade root block assembly of the present disclosure weight and cost efficient and so desirable for a user.

Optionally, the cheek piece is attached to each of first root portion end and the second root portion end by a diffusion bonding process.

The attachment of the fan blade to the cheek piece is important to the integrity of the complete fan blade assembly. Diffusion bonding has several key advantages over conventional welding joining processes. For example, the joint can be made with no localised thermal gradient being present to induce distortion or to create residual stresses in the component. Furthermore, the microstructure at the bonded region is exactly the same as the parent metals.

Optionally, the cheek piece comprises a unitary 'U'-shaped profile and extends around each of the first root portion end and the second root portion end.

By forming the cheek piece with a unitary 'U'-shaped profile, the root block assembly is simpler to manufacture and assemble, making it more convenient for a user.

The 'U'-shaped profile accommodates the first and second root portions without the need for further support during the manufacturing process. This further assists the manufacture of the root block assembly of the disclosure.

Optionally, the cheek piece comprises a first cheek piece portion and a second cheek piece portion,
each of the first cheek piece portion and the second cheek piece portion comprising an 'L'-shaped profile, the first cheek piece portion and the second cheek piece portion co-operating to extend around each of the first root portion end and the second root portions end.

Forming the cheek piece as a pair of 'L'-shaped (first and second) cheek piece portions, makes the manufacture of the cheek piece easier because each cheek piece portion is itself smaller and requires less machining.

Optionally, the fan blade root block assembly further comprises a cheek piece connection strip, wherein the cheek piece connection strip is ultrasonically welded across a first joint between the first cheek piece portion and the second cheek piece portion.

The cheek piece connection strip joins the first and second cheek piece portions to form a gas tight seal between the first and second cheek piece portions prior to the attachment of the cheek piece to the fan blade root portions by a diffusion bonding process.

Optionally, the cheek piece comprises a first cheek piece plate, and a second cheek piece plate, the first cheek piece plate being attached to the first root portion, and the second cheek piece plate being attached to the second root portion, and a distal end of the first root portion is attached to a distal end of the second root portion.

The use of a pair (first and second) of cheek piece plates further simplifies the manufacture of the root block of the disclosure. The cheek piece plates may be more easily formed as flat plates, although there are additional joints between each of the two cheek piece plates and the respective first and second root portions.

Optionally, the fan blade root block assembly further comprises a plurality of cheek piece attachment strips, a cheek attachment strip being ultrasonically welded across each of a second joint between the first root portion and the cheek piece, and a third joint between the second root portion and the cheek piece.

The cheek attachment strips are used to ensure a gas tight seal between each of the root portions and corresponding features of the cheek piece. These attachment strips also provide secure location between the cheek piece and the root portions of the fan blade during the process (such as, for example, diffusion bonding) of securely attaching these parts together.

The use of ultrasonic welding, being a localised joining technique, minimises the thermal effects surrounding the joint region.

Optionally, the cheek piece connection strip is formed from a titanium alloy.

The cheek piece and the fan blade root portions are conventionally manufactured from a titanium alloy material. The choice of a titanium alloy material for the cheek piece connection strips provides for optimum compatibility between the cheek piece and the root portions of the fan.

Optionally, the plurality of cheek attachment strips is formed from a titanium alloy.

Optionally, the titanium alloy is a Ti6/4 alloy.

Ti6/4 is a commonly used aerospace alloy that is heat treatable and combines excellent strength and corrosion resistance with ease of welding and fabrication

According to a second aspect of the present disclosure there is provided a gas turbine engine comprising a fan blade root block assembly according to the first aspect.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic partial sectional view of a turbofan engine comprising a fan blade root block assembly according to the present disclosure;
Figure 2 shows a schematic sectional view of a fan blade root block assembly according to a first embodiment of the disclosure;
Figure 3 shows a schematic sectional view of an alternative embodiment of the fan blade root block assembly of Figure 2;
Figure 4 shows a schematic sectional view of a further alternative embodiment of the fan blade root block assembly of Figure 2.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

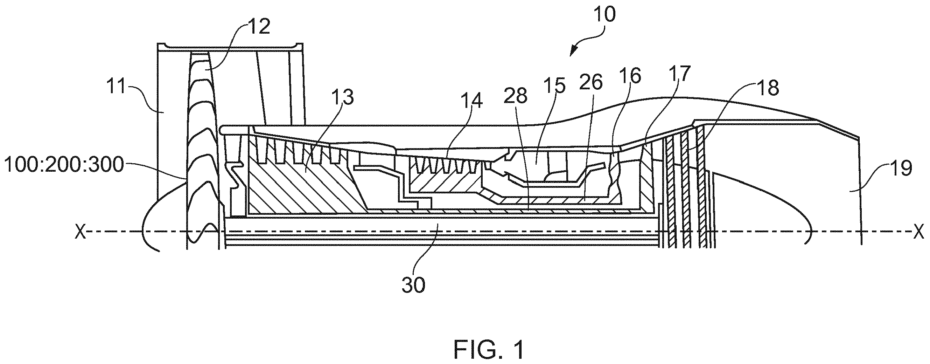

A turbofan gas turbine engine 10, as shown in figure 1, comprises in flow series an intake 11, a fan 12, an intermediate pressure compressor 13, a high pressure compressor 14, a combustion chamber 15, a high pressure turbine 16, an intermediate pressure turbine 17, a low pressure turbine 18 and an exhaust 19. The high pressure turbine 16 is arranged to drive the high pressure compressor 14 via a first shaft 26. The intermediate pressure turbine 17 is arranged to drive the intermediate pressure compressor 13 via a second shaft 28 and the low pressure turbine 18 is arranged to drive the fan 12 via a third shaft 30. In operation air flows into the intake 11 and is compressed by the fan 12. A first portion of the air flows through, and is compressed by, the intermediate pressure compressor 13 and the high pressure compressor 14 and is supplied to the combustion chamber 15. Fuel is injected into the combustion chamber 15 and is burnt in the air to produce hot exhaust gases which flow through, and drive, the high pressure turbine 16, the intermediate pressure turbine 17 and the low pressure turbine 18. The hot exhaust gases leaving the low pressure turbine 18 flow through the exhaust 19 to provide propulsive thrust. A second portion of the air bypasses the main engine to provide propulsive thrust.

The fan 12 comprises a plurality of fan blades arranged in a circumferential array. Each of the fan blades is secured at a radially innermost end (or root) to a rotor. The root of each fan blade is thickened relative to the blade itself in order to provide sufficient material to form a root securing arrangement. An example of this root securing arrangement is a 'fir tree' blade root fixing. Such blade root fixings are well known in the art and are not described further.

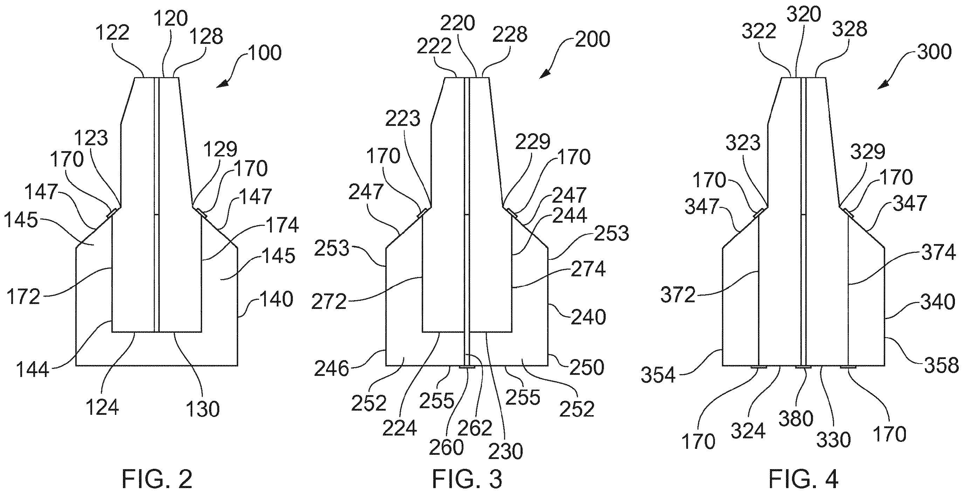

Referring to Figure 2, a fan blade root block assembly according to a first embodiment of the disclosure is designated generally by the reference numeral 100.

The root block assembly 100 comprises a fan blade 120 and a cheek piece 140. The fan blade 120 comprises a first root portion 122 and a second root portion 128. The first root portion 122 has a first root portion end 124. The second root portion 128 has a second root portion end 130.

The first root portion 122 is aligned side by side with the second root portion 128, such that the first root portion end 124 is aligned with the second root portion end 130.

In the present embodiment, the fan blade 120 is formed by a diffusion bonding super-plastic forming process from a titanium alloy material.

The cheek piece 140 is formed as a unitary component having a 'U'-shaped profile 144. The aligned first root portion end 124 and second root portion end 130 are accommodated within the 'U'-shaped profile 144. The legs of the 'U'-shaped profile 144 extend around each of the first root portion end 124 and second root portion end 130.

The distal ends 147 of the legs 145 of the 'U'-shaped profile 144 are shaped to correspond to the adjoining outwardly facing shoulders 123,129 of the first root portion 122 and second root portion 128.

In this embodiment, the cheek piece 140 is formed from a titanium alloy.

A cheek piece attachment strip 170 connects the distal end 147 of each of the legs 145 of the 'U'-shaped profile 144, to corresponding ones of the shoulders 123,129 of the first root portion 122 and second root portion 128.

The cheek piece attachment strips 170 are attached to the cheek piece 140 and first and second root portions 122,128 by an ultrasonic welding process.

Once the cheek piece 140 has been attached to the first and second root portions 122,128, a diffusion bonding process is employed to permanently secure these components together.

Referring to Figure 3, a fan blade root block assembly according to a second embodiment of the disclosure is designated generally by the reference numeral 200. Features of the fan blade root block assembly 200 which correspond to those of the fan blade root block assembly 100 have been given corresponding reference numerals for ease of reference.

The fan blade root block assembly 200 comprises a fan blade 220 and a cheek piece 240. The fan blade 220 comprises a first root portion 222 and a second root portion 228. The first root portion 222 has a first root portion end 224. The second root portion 228 has a second root portion end 230.

The first root portion 222 is aligned side by side with the second root portion 228, such that the first root portion end 224 is aligned with the second root portion end 230.

As with the embodiment described above, the fan blade 220 is formed by a diffusion bonding super-plastic forming process from a titanium alloy material.

The cheek piece 240 comprises a first cheek piece portion 246 and a second cheek piece portion 250. Each of the first cheek piece portion 246 and second cheek piece portion 250 has an 'L'-shaped profile 252. The first cheek piece portion 246 and the second cheek piece portion 250 are arranged in an opposing fashion with the ends of the short legs of the 'L' adjoining one another, to together form a 'U'-shaped profile 244.

The aligned first root portion end 224 and second root portion end 230 are accommodated within the 'U'-shaped profile 244. The long legs of the 'L'-shaped profiles 252 extend around each of the first root portion end 224 and second root portion end 230.

The distal ends 247 of the long legs 253 of the 'L'-shaped profiles 252 are shaped to correspond to the adjoining outwardly facing shoulders 223,229 of the first root portion 222 and second root portion 228.

As in the arrangement previously described, the cheek piece 240 is formed from a titanium alloy.

A cheek piece attachment strip 170 connects the distal ends 247 of the long legs 253 of the 'L'-shaped profiles 252, to corresponding ones of the shoulders 223,229 of the first root portion 222 and second root portion 228.

A cheek piece connection strip 260 is then used to attach together the distal ends of the short legs 255 of the 'L'-shaped profiles 252.

The cheek piece attachment strips 170 and the cheek piece connection strip 260, are attached to the first cheek piece portion 246, the second cheek piece portion 250, and the first and second root portions 222,228 by an ultrasonic welding process.

Once the cheek piece 240 has been attached to the first and second root portions 222,228, a diffusion bonding process is employed to permanently secure these components together.

Referring to Figure 4, a fan blade root block assembly according to a third embodiment of the disclosure is designated generally by the reference numeral 300. Features of the fan blade root block assembly 300 which correspond to those of the fan blade root block assembly 100 have been given corresponding reference numerals for ease of reference.

The root block assembly 300 comprises a fan blade 320 and a cheek piece 340. The fan blade 320 comprises a first root portion 322 and a second root portion 328. The first root portion 322 has a first root portion end 324. The second root portion 328 has a second root portion end 330.

The first root portion 322 is aligned side by side with the second root portion 328, such that the first root portion end 324 is aligned with the second root portion end 330.

As for the previous embodiments, the fan blade 320 is formed by a diffusion bonding super-plastic forming process from a titanium alloy material.

The cheek piece 340 comprises a first cheek piece plate 354 and a second cheek piece plate 358.

The first cheek piece plate 354 is attached to an outwardly facing surface of the first root portion 322. The second cheek piece plate 358 is attached to an outwardly facing surface of the second root portion 328.

The aligned first root portion end 124 and second root portion end 130 are accommodated within the first cheek piece plate 354 and the second cheek piece plate 358. The first cheek piece plate 354 and the second cheek piece plate 358 sandwich the first root portion end 124 and second root portion end 130.

The distal ends 347 of the first cheek piece plate 354 and the second cheek piece plate 358 are shaped to correspond to the adjoining outwardly facing shoulders 323,329 of the first root portion 322 and second root portion 328.

As in the previous embodiments, the first cheek piece plate 354 and the second cheek piece plate 358 are formed from a titanium alloy.

A cheek piece attachment strip 170 connects the distal ends 347 of the first cheek piece plate 354 and the second cheek piece plate 358, to corresponding ones of the shoulders 323,329 of the first root portion 322 and second root portion 328.

A root portion connection strip 380 is then used to attach together the first root portion end 324 and the second root portion end 328.

The cheek piece attachment strips 170 are attached to the first cheek piece plate 354 and the second cheek piece plate 358 and first and second root portions 122,128 by an ultrasonic welding process.

Once the cheek piece 340 has been attached to the first and second root portions 322,328, a diffusion bonding process is employed to permanently secure these components together.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A fan blade root block assembly (100) comprising:
a fan blade (120); and
a cheek piece (140),
the fan blade (120) comprising:
a first root portion (122) having a first root portion end (124); and
a second root portion (128) having a second root portion end (130),
the first root portion (122) being aligned side by side with the second root portion (128), and the cheek piece (140) being attached to each of the first root portion end (124) and the second root portion end (130).

2. The fan blade root block assembly (100) as claimed in Claim 1, wherein the cheek piece (140) is attached to each of first root portion end (124) and the second root portion end (130) by a diffusion bonding process.

3. The fan blade root block assembly (100) as claimed in Claim 1 or Claim 2, wherein the cheek piece (140) comprises a unitary 'U'-shaped profile and extends around each of the first root portion end (124) and the second root portion end (130).

4. The fan blade root block assembly (200) as claimed in Claim 1 or Claim 2, wherein the cheek piece (240) comprises a first cheek piece portion (246) and a second cheek piece portion (250),
each of the first cheek piece portion (246) and the second cheek piece portion (250) comprising an 'L'-shaped profile (252), the first cheek piece portion (246) and the second cheek piece portion (250) co-operating to extend around each of the first root portion end (224) and the second root portion end (230).

5. The fan blade root block assembly (200) as claimed in Claim 4, further comprising a cheek piece connection strip (170), and wherein the cheek piece connection strip (170) is ultrasonically welded across a first joint (262) between the first cheek piece portion (246) and the second cheek piece portion (250).

6. The fan blade root block assembly (300) as claimed in Claim 1 or Claim 2, wherein the cheek piece (340) comprises a first cheek piece plate (354), and a second cheek piece plate (358), the first cheek piece plate (354) being attached to the first root portion (322), and the second cheek piece plate (358) being attached to the second root portion (328), and a distal end of the first root portion (322) is attached to a distal end of the second root portion (328).

7. The fan blade root block assembly (300) as claimed in any one of Claims 1 to 6, further comprising a plurality of cheek attachment strips (170), a cheek attachment strip (170) being ultrasonically welded across each of a second joint (372) between the first root portion (322) and the cheek piece (340), and a third joint (374) between the second root portion (328) and the cheek piece (340).

8. The fan blade root block assembly (200) as claimed in Claim 5, wherein the cheek piece connection strip (170) is formed from a titanium alloy.

9. The fan blade root block assembly (300) as claimed in Claim 7, wherein the plurality of cheek attachment strips (170) is formed from a titanium alloy.

10. The fan blade root block assembly (200:300) as claimed in Claim 8 or Claim 9, wherein the titanium alloy is a Ti6/4 alloy.

11. A gas turbine engine comprising a fan blade root block assembly (100:200:300) as claimed in any one of Claims 1 to 10.
